# EUROPEAN PATENT SPECIFICATION

(11) **EP 2 456 972 B1**
(45) Date of publication and mention of the grant of the patent: **13.11.2013**
(21) Application number: 10739661.6
(22) Date of filing: 22.07.2010
(51) Int. Cl.: F03B 13/18

(54) **WAVE ENERGY CONVERSION APPARATUS AND METHOD**
VORRICHTUNG UND VERFAHREN FÜR WELLENENERGIEUMWANDLUNG
APPAREIL ET PROCÉDÉ DE CONVERSION D'ÉNERGIE DES VAGUES

(30) Priority: 24.07.2009 GB 0912922
(43) Date of publication of application: 30.05.2012
(73) Proprietor: Aquamarine Power Limited, Glasgow G2 5NJ (GB)
(72) Inventor: CROWLEY, Michael, Glouc GL2 7EL (GB)
(74) Representative: Hargreaves, Timothy Edward
(86) International application number: PCT/GB2010/001393
(87) International publication number: WO 2011/010102

(56) References cited:
- WO-A1-98/17911
- WO-A1-02/077447
- JP-A- 4 019 363
- US-A- 4 754 157

## Description

### Field of the invention

The present invention relates to a wave energy conversion apparatus and method.

### Background to the invention

Concerns about global warming and environmental pollution caused by the use of fossil fuels in energy generation has resulted in a move towards so-called 'green' energy sources, or renewable energy sources such as tidal movement, wave power and wind power.

It has long been recognised that the waves in the sea and other bodies of water provide a vast and substantially untapped quantity of energy and many inventions have been made with the goal of achieving the aim of extracting power from the sea. However, the extraction of energy from wave power presents technical difficulties due in particular to the oscillating nature of the waves and to the significant variations in prevailing wave conditions over time.

There are numerous examples of wave power capture systems. Such systems include mechanical devices that are moved by operation of the waves, and power conversion systems that convert the resulting mechanical energy into electrical energy.

A previous patent application, WO2006/100436, filed in the name of the present applicants, disclosed a wave power capture system comprising a wave energy conversion device for use in relatively shallow water, which addressed some of the problems associated with previously known wave power capture systems.

The wave energy conversion device of WO2006/100436 comprises a flap portion biased to the vertical in use and formed and arranged to oscillate backwards and forwards about the vertical in response to wave motion acting on faces of the flap portion. The flap portion is coupled to a hydraulic circuit via a positive displacement pump such that oscillation of the flap portion causes the flow of fluid through the hydraulic circuit, which drives operation of a variable displacement hydraulic motor.

In order to maximize the extraction of power using wave energy conversion devices it has been recognised that tuning of properties of the devices to the wave conditions can be important, so that such properties are optimised for the amplitude and frequency of waves that are experienced by the devices.

Generally speaking larger waves require higher resistive torque to be provided by a device than smaller waves to abstract the most energy. In real seas devices experience a spectrum of wave periods and amplitudes, and in order to obtain the maximum energy abstraction the oscillator torque would in theory have to be continuously tuned to the current wave, which would require advance knowledge of the size of the wave and a power takeoff system which could adjust immediately to the size of the wave. In practice, perfect continuous tuning and immediate adjustment is not possible but various practical arrangements have been suggested to provide tuning of the properties of wave energy conversion devices to wave conditions.

For example, it has been suggested to use an oil hydraulic power take-off system downstream from a wave energy conversion device, that allows for rapid control of the system pressure (for example using a swash plate motor) which in turn affects the resistive torque provided by the wave energy conversion device. The pressure could be adjusted continuously in dependence, for example, on an oil flow rate through the system. However, there are significant disadvantages to using oil hydraulic systems in the under-sea environment, for example the level of maintenance required and the possibility of pollution. Furthermore such an arrangement is relatively complex.

In another control system, described in US 6,476,511 both damping and spring forces are applied to a wave energy conversion device. In this example, the wave energy conversion device is an articulated structure, and different sets of rams are used to apply either damping or spring forces via an oil hydraulic system. Different rams are selectively enabled and disabled to tune the system to a prevailing wave environment. That system is complex, again requires the use of oil hydraulics, and is specific to the articulated structure.

In other control systems, latch arrangements are used to stop motion of a wave energy conversion device at different points in a cycle, in order to match the motion of a wave energy conversion device more closely to a prevailing wave climate.

Some known systems are arranged to smooth the power take-off from a wave power system by an electrical generator, for example by control over resistive torque provided by the electrical generator or by use of fluid accumulators to smooth pressure variations provided to a turbine associated with the generator. Such systems usually comprise a single wave power device connected to a single turbine and/or generator. However, it is becoming increasingly desirable to use wave power for large scale power generation, and thus systems that can be used to provide improved efficiency of energy extraction whilst also facilitating large-scale power take-off are desirable.

WO02/077447 describes a plant for production of electric energy from sea waves consisting of a frame carrying at least two paddle units which move successively in series. WO98/17911 describes a marine generator with an oscillating sluice-valve and a piston pump, which pumps water into an elevated reservoir. JP4019363 describes a float which is moved by waves, wherein the motion of the float is transmitted to a piston and cylinder via springs. US4754157 describes the extraction of energy from wave action using a float, a piston-cylinder pump and an anchor.

There is an ongoing need for improved or at least alternative apparatus and methods for generating electrical energy from waves. In particular there is on ongoing need for robust, practical apparatus that provides for improved efficiency of power extraction and that enable wave energy conversion devices to operate effectively in variable wave conditions.

### Summary of the invention

In a first aspect of the invention there is provided an energy conversion apparatus comprising:- a mechanical element arranged in operation to move repeatedly in a cycle in response to wave motion, wherein the speed of the mechanical element varies between a maximum and a minimum during each cycle; power extraction means arranged to extract energy from the movement of the mechanical element; a fluid accumulator device arranged to assist the movement, in response to the wave motion, of the mechanical element during at least one part of the cycle during which the speed of movement of the mechanical element is substantially equal to the minimum for that cycle, and a fluid conduit for transferring pressurised fluid to an electrical power generation system. The power extraction means comprises a fluid pressurisation system that is arranged so that in operation fluid in the fluid pressurisation system is pressurised in response to movement of the mechanical element, the fluid pressurisation system comprises a one-way valve for transferring pressurised fluid from the fluid pressurisation system and the fluid accumulator deviceis located upstream of the one-way valve. The fluid conduit is located downstream of the at least one one-way valve and the electrical power generation system comprises a turbine and an associated electrical generator.

The at least one part of the cycle may comprise a part of the cycle when the mechanical element is substantially stationary.

Little or no power may be extracted from those parts of the cycle when the mechanical element is substantially stationary. By providing assistance in moving the mechanical element when the speed of movement of the mechanical element is substantially equal to the minimum (for example, when the mechanical element is stationary) the speed of movement of the mechanical element can be moved away from its minimum more rapidly than otherwise would be the case, thereby increasing the power extraction during each cycle. By providing the movement assistance means upstream of the one-way valve of the fluid pressurisation system, the movement assistance can be provided without adversely affecting operation of downstream power take-off components. Furthermore, by providing the movement assistance means upstream of the one-way valve, operation of the energy conversion apparatus can be assisted, without affecting operation of other energy conversion apparatus that may, for example, be connected together downstream to a common power take-off system.

The at least one part of the cycle may be a part of the cycle when the speed of movement of the mechanical element is less than a threshold speed.

The power extraction means may be configured to extract power from work performed by the mechanical element against a resistance to motion. The mechanical element may comprise a single component or multiple components.

The apparatus may further comprise a fluid conduit downstream of the one way valve(s) for transferring pressurised fluid to an electrical power generation system. The electrical power generation system may comprise a turbine and an associated electrical generator. The one-way valve(s) may be located off-shore and the electrical power generation system is located on-shore.

The movement assistance means may comprise energy storage means arranged to store energy from the motion of the mechanical element during a further part of each oscillation cycle and to release the stored energy to the mechanical element during said at least one part of the cycle during which the speed of movement of the mechanical element is substantially equal to the minimum for that cycle.

By providing such energy storage means, a particularly simple and efficient means of assisting the motion of the mechanical element during the at least one part of the cycle when the mechanical element is substantially stationary may be provided. By providing for such energy storage means, the apparatus may not need to expend additional energy in providing the assistance. No additional energy source may be required.

The energy storage means may apply both damping and spring forces to the mechanical element, with damping and spring forces being applied at different parts of the cycle. By applying damping or spring forces with the same means (for example, the same energy storage device) a particularly simple design may be provided for the apparatus.

At least one property of the energy storage means may be selected in dependence on the expected wave conditions. Thus, the apparatus may be tuned to prevailing or otherwise expected wave conditions to maximise power extraction. The at least one property may be the capacity of the energy storage means.

The fluid pressurisation system may comprise at least two one-way valves. A first of the one-way valves may be arranged to transfer, in operation, pressurised fluid from the fluid pressurisation system and a second of the one-way valves may be arranged to transfer, in operation, fluid into the fluid pressurisation system. The first and second one-way valves may be arranged to operate so that the first one-way valve is open when the second one-way valve is closed, and to that the first one-way valve is closed when the second one-way valve is open. The energy storage means may be located between the first one-way valve and the second one-way valve.

The energy storage means may comprise at least one fluid accumulator device for accumulating fluid from and releasing fluid to the fluid pressurisation system.

The use of a fluid accumulator device as the energy storage means can provide for a particularly robust and simple way of reducing the resistance during the at least one part of the cycle as desired. Fluid accumulator devices are generally easy to install, are generally reliable and may have few if any moving parts. The fluid accumulator device may be arranged so that the apparatus may function, and wave energy may be extracted, even if the fluid accumulator device is non-operational. That can be particularly useful as in practice the wave energy conversion device may be installed in a remote location, the fluid accumulator devices may be located off-shore, and maintenance may be difficult.

The fluid pressurisation system may comprise a piston and cylinder coupled to the mechanical element, and the piston may be arranged to move in the cylinder in response to movement of the mechanical element thereby to pressurise fluid in the cylinder. The fluid pressurisation system may further comprise a fluid transfer conduit connecting the cylinder to at least one one-way-valve for transferring pressurised fluid from the cylinder, and the or each fluid accumulator device may be in communication with the fluid transfer conduit. The or each fluid accumulator device may be directly or indirectly connected to the fluid transfer conduit.

The fluid pressurisation system may comprise a first one-way valve arranged to transfer fluid from the fluid pressurisation system in response to movement of the piston in a first direction, a second one-way valve arranged to transfer fluid from the fluid pressurisation system in response to movement of the piston in a second direction, a first accumulator device upstream of the first one-way valve, and a second accumulator device upstream of the second one-way valve.

In another independent aspect of the invention there is provided a wave energy conversion system comprising a plurality of wave energy conversion apparatus, each wave energy conversion apparatus being as claimed or described herein, wherein the one or more one-way valves of each apparatus are connected to a common fluid conduit for transferring pressurised fluid from the plurality of wave energy conversion apparatus to an electrical power generation sub-system.

In a further independent aspect of the invention there is provided a method of converting wave energy comprising:- arranging a mechanical element to move repeatedly in a cycle in response to wave motion; and extracting energy from the movement of the mechanical element, wherein the speed of movement of the mechanical element varies between a maximum and a minimum during each cycle, and the method further comprises assisting the movement of the mechanical element during at least one part of the cycle during which the speed of movement of the mechanical element is substantially equal to the minimum for that cycle. The extracting of energy comprises using a fluid pressurisation system that is arranged so that in operation fluid in the fluid pressurisation system is pressurised in response to the movement of the mechanical element. The method further comprises using a fluid accumulator device to assist movement of the mechanical element, wherein the fluid accumulator device is located upstream of the at least one one-way valve. The method further comprises generating electricity from the extracted energy using an electrical power generation system comprising a turbine and an associated electrical generator.

There may also be provided an apparatus or method substantially as described herein with reference to the accompanying drawings.

Any feature in one aspect of the invention may be applied to other aspects of the invention, in any appropriate combination. For example, apparatus features may be applied to method features and vice versa.

### Detailed description of embodiments

Embodiments of the invention are now described, by way of non-limiting example, and are illustrated in the following figures, in which:-
Figure 1 is a schematic illustration of a wave energy conversion system for conversion of the oscillating motion of a wave energy conversion device to electricity;
Figures 2 and 3 are schematic illustrations showing part of the embodiment of Figure 1 in more detail;
Figure 4 is a schematic illustration of a wave energy conversion system in a further embodiment; and
Figures 5 to 7 are schematic illustrations of part of a related example.

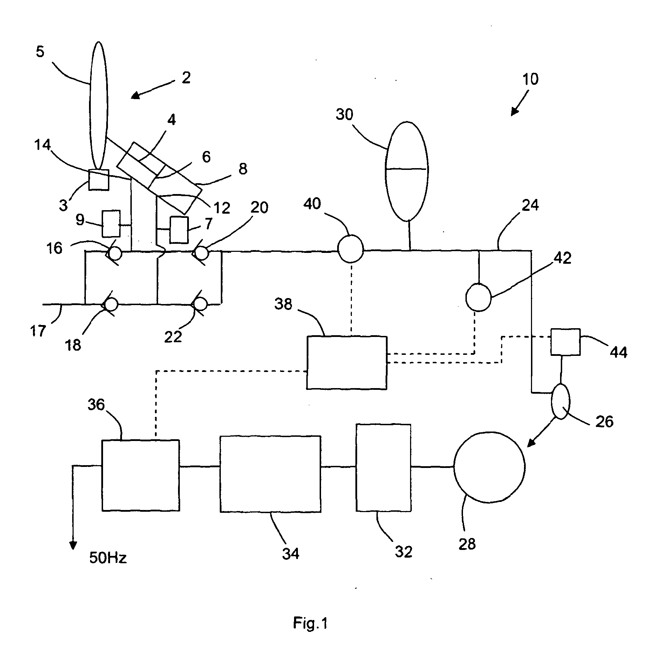

A wave energy conversion system is illustrated in Figure 1. The system includes a wave energy conversion device 2, coupled by a suitable linkage and a driving rod 4 to a hydraulic ram (piston) 6 which reciprocates in a cylinder 8 and is double acting.

The cylinder 8 forms part of a hydraulic circuit 10 to which it is connected by an inlet/outlet port 12 at one end of the cylinder, an inlet/outlet port 14 at the opposite end of the cylinder 8, and an arrangement of non-return valves 16, 18, 20, 22.

An accumulator 7 is provided between the inlet/outlet port 12 at one end of the cylinder and corresponding non-return valves 18, 22. Similarly, an accumulator 9 is provided between the inlet/outlet port 14 at the other end of the cylinder and corresponding non-return valves 16, 20.

The wave energy conversion device 2 comprises a base portion 3 anchored to the bed of the sea or other body of water and an upstanding flap portion 5, of generally rectangular form, mounted for rotation about a pivot axis to the base 3. An example of a suitable wave energy conversion device 2 is described, for example, in WO 2006/100436. In the embodiment of Figure 1 the flap portion 5 is 18m wide, but any suitable width or other dimension of the flap can be used. In operation the flap portion 5 is placed to face the direction of wave motion, and the wave motion causes the flap portion to oscillate about the pivot axis, which in turn drives the ram 6 back and forth in the cylinder 8.

In operation, the ram 6 is driven backwards and forwards in the cylinder 8 by oscillation of the flap portion 5 caused by the wave motion. On each forwards stroke of the ram, low pressure sea water from inlet pipe 17 is drawn into the cylinder 8 through port 14 via non-return valve 16, and high pressure sea water is pumped out of the cylinder 8 through port 12 and non-return valve 22 into the fluid conduit 24. On each backwards stroke of the ram, low pressure sea water from inlet pipe 17 is drawn into the cylinder 8 through port 12 via non-return valve 18, and high pressure sea water is pumped out of the cylinder 8 through port 14 and non-return valve 20 into the fluid conduit 24.

The accumulators 7, 9 are charged and discharged as the ram is driven backwards and forwards in the cylinder. The effect of the charging and discharging of the accumulators 7, 9 is discussed in more detail below.

The fluid conduit 24 forms part of the hydraulic circuit 10 and connects the outlets 12, 14 of the cylinder 8 to a pair of spear valves 26 (only a single spear valve is shown for clarity). The spear valves 26 are aligned with a Pelton wheel 28, such that in operation a water jet is forced out of the spear valves and into Pelton wheel buckets, driving rotation of the Pelton wheel 28. The average pressure in the fluid conduit 24 in operation can be referred to as the system pressure.

The hydraulic circuit of the system of Figure 1 is an open circuit, in that the sea water is not returned to the system after it has exited the Pelton wheel, but instead is passed back into the sea via a drainage conduit (not shown). In an alternative embodiment, the hydraulic circuit is a closed circuit and the hydraulic fluid is discharged from the Pelton wheel 28 into a storage or buffer tank, from where it is returned to the inlet pipe 17 via a return conduit. In variants of the embodiment, multiple wave energy conversion devices 2, each with a corresponding cylinder 8 and piston 6 arrangement, are connected to the same hydraulic circuit 10, which can provide a smoothing of pressure variations.

An accumulator 30, comprising a pressure cylinder containing air, is connected to the fluid conduit 24 between the non-return valves 20, 22 and the spear valves 26. The mass of air in the accumulator 30, its pre-charge pressure (P_{A}) and the volume of the accumulator 30 (V_{A}) are known. As fluid is pumped out of the cylinder 8 into the fluid conduit 24 the air is compressed to store some of the pressure produced by the pumping action of the ram 6. This has the effect of smoothing variations in the pressure (P) of the fluid in the fluid conduit 24 that is delivered to the Pelton wheel 28.

The Pelton wheel 28 is connected to and drives a flywheel 32. The flywheel stores energy from the Pelton wheel until it is converted into electricity by an induction generator/motor 34 which connects to the flywheel 32. The Pelton wheel 28, the flywheel 32 and the shaft linking the Pelton wheel 28 and the flywheel 32 together form a turbine apparatus. The output from the induction generator 34 is converted via an electric regenerative drive 36 suitable for connection to an electricity grid (not shown).

A controller 38 (usually a programmable logic controller) is connected to the electric regenerative drive 36 and generator 34 and is operable to control the level of torque applied to the flywheel 32 by the generator and thus the level of power extracted by the generator 34 from the flywheel 32. The controller 38 includes a computer interface via which an operator can select and modify various parameters or control operation of the system if desired. A flow meter 40 and a pressure meter 42 for measuring the flow and pressure in the fluid conduit 24 are also provided and are connected to the controller 38, and in operation provide flow and pressure readings to the controller 38. The controller 38 is connected to a spear valve controller 44 which is operable to control operation of the spear valves 26, in accordance with instructions provided by the controller 38.

In the embodiment of Figure 1, the wave energy conversion device 2, the cylinder 8, the accumulators 7, 9 and the arrangement of non-return valves 16, 18, 20, 22 are located offshore. The other components of the system, from the flow meter 40 downstream, are located on-shore. As the number of offshore or sub-sea components is minimised, and the more sensitive electronic components are located on-shore, installation and maintenance of the system is straightforward. Furthermore, in normal operation (excluding shut-down, start-up or over-ride procedures) control and sensor signals do not need to be transmitted between on-shore and off-shore components, making the system robust and relatively easy to maintain.

The efficiency of operation, and the amount of power extracted by the system, is dependent on the prevailing wave conditions, and characteristics of the system (for example the system pressure, the size of the flap, and the amplitude of movement of the flap 5) are matched to those prevailing wave conditions. It is in the nature of the wave power system that the power provided to the system varies during each wave cycle. For example, little if any energy is provided by the flap 5 to the system during those portions of the wave cycle when the flap 5 has reached the ends of range of motion and is stationary or almost stationary. Conversely, the maximum amount of energy is provided by the flap 5 to the system when the flap 5 is moving at or near its maximum speed during the middle of each cycle.

In the system of Figure 1, the accumulators 7, 9 assist the movement of the flap during the parts of the wave cycle when the flap 5 is substantially stationary at each end of its range of movement, which enables the flap 5 to build up some speed before the system begins to pump significant amounts of water through the hydraulic circuit 10. In turn it has been found that the output power obtained from the system is increased. The use of the accumulators 7, 9 also reduces the possibility of the system stalling.

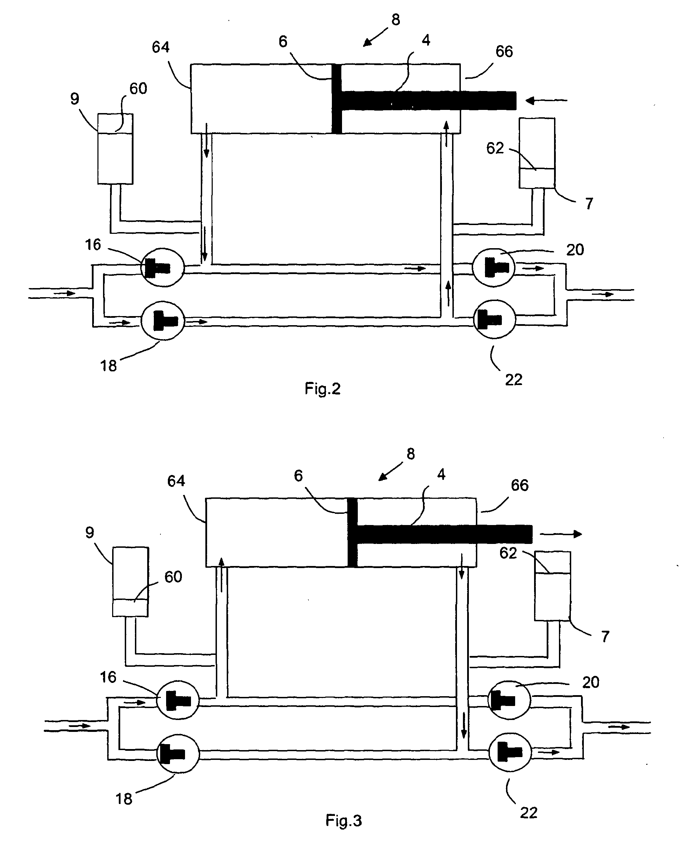

Operation of the accumulators 7, 9 is illustrated in more detail in Figures 2 and 3. Figure 2 shows the relative liquid levels 60, 62 in the accumulators 7, 9 when the flap 5, and thus the piston 6, is at around the centre of the wave cycle and is moving at roughly its maximum speed towards one end 64 of the cylinder 8.

It can be seen that the motion of the piston 6 pressurises fluid in the cylinder 8 at the side of the piston 6 closest to the end 64, which in turn causes the liquid level 60 and thus the pressure in the accumulator 9 to increase, and the one way valve 20 to open and fluid to flow from the cylinder 8 into the hydraulic system 10 via the one way valve 20. At the same time, the motion of the system 6 decreases the pressure of the fluid in the cylinder 8 at the side of the piston 6 closest to the other end 66, which in turn causes the liquid level 62 and thus the pressure in the accumulator 7 to decrease, and the one way valve 18 to open drawing in fluid to the cylinder 8.

When the flap 5 reaches the end of its range of movement, the piston 6 is at or near the end 64 of the cylinder 8 and is stationary or close to being stationary. The torque on the flap 5 from the wave motion is at that stage starting to push the piston 6 back towards the other end 66 of the cylinder 8. The pressure in the accumulator 9 is at that stage at or close to its maximum, whereas the pressure in the accumulator 7 is at or close to its minimum, and the difference in pressure between the accumulators 7, 9 acts to provide a force on the piston 6 towards the other end 66 of the cylinder 8, and thus acts to reduce the resistive torque of the flap 5 to the wave motion.

Figure 3 shows the relative liquid levels 60, 62 in the accumulators 7, 9 when the flap 5, and thus the piston 6, is again at around the centre of the wave cycle but is now moving at roughly its maximum speed towards the other end 66 of the cylinder 8. It can be seen that the liquid level 60 of the accumulator 9 has now decreased, whereas the liquid level 62 of the accumulator 7 is increasing. The valves 16, 22 are now open, whereas the valves 18, 20 are now closed. When the piston 6 reaches the other end of the cylinder 8, the difference in pressure between the accumulators 7, 9 again acts to reduce the resistive torque experienced by the flap 5.

It can be understood from Figures 2 and 3 that at the end of each stroke of the piston 6 the energy stored in one of the accumulators 7, 9 is used to get the piston, and thus the flap 5, moving in the opposite direction. It can also be understood that as the pressure in one accumulator 7, 9 is reducing the pressure in the other accumulator 7, 9 is increasing.

The size and pre charge pressure of the accumulators 7, 9 is usually selected during design or manufacture of the system in dependence on the expected, average prevailing wave conditions in the location where the system is to be installed. It can be understood that the size and pressure of the accumulators are important as, at on extreme, if the accumulators were too large then all of the flap movement would be used in bringing the accumulators up to pressure and no pumping of fluid to the hydraulic system 10 would occur. Conversely if the accumulator were too small, they would have little or no effect. Similarly, if the accumulator pressure were too high there would be little or no movement of the flap 5 before pumping started, conversely if the accumulator pressure were too low the amount of energy storage before pumping starts would be reduced.

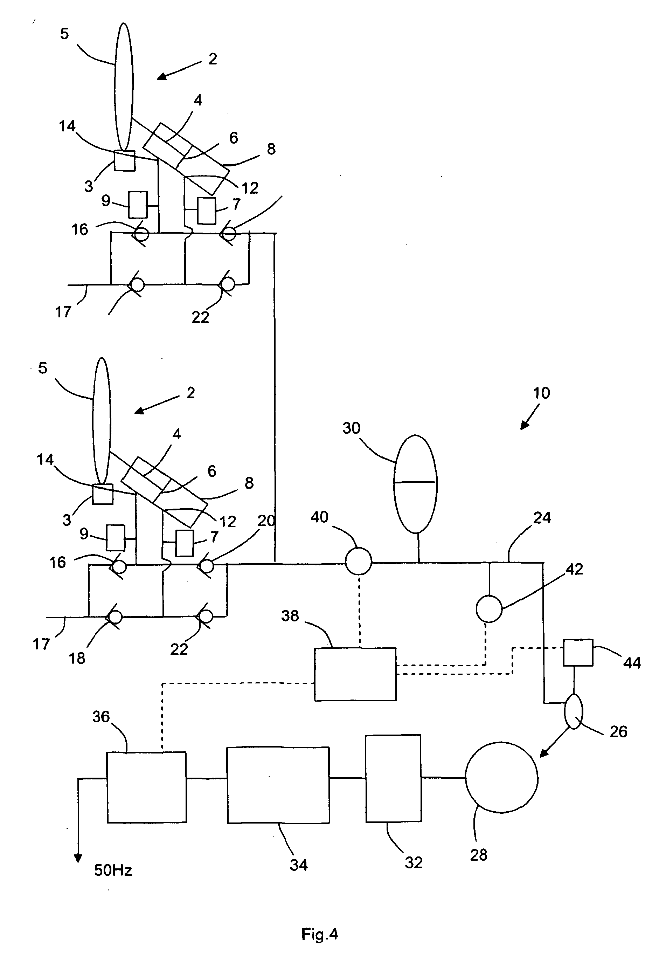

An alternative embodiment is illustrated in Figure 4, in which a plurality of wave energy conversion systems are connected in parallel to the fluid conduit 24 and to the power take-off system comprising the Pelton wheel 28 and electrical generation components 32, 34,36. Each wave energy conversion system includes respective one-way valves 16, 18, 20, 22 and accumulators 7, 9 located upstream of the one-way valves 16, 18, 20, 22. Thus, movement assistance can be provided to each wave power device individually whilst also providing for a common power take-off system. Two wave power systems connected in parallel are shown in Figure 4, but any suitable number of systems can be connected.

Surge pressures that occur in pipework of the hydraulic system 10 can also affect the tuning, as these influence the pressure at which the piston pumps and the pumping pressure affects the fluid volumes in the accumulators 7, 9. Surge pressures are particularly influential where there is only one flap 5 and cylinder 8 arrangement, as there is then no smoothing effect of the flow resulting from phase differences between multiple flap and cylinder arrangements pumping fluid through the same hydraulic circuit 10, and so relative peak fluid velocities are larger.

For each wave climate there is an optimal accumulator size and pre charge pressure. The accumulator size and pre charge pressure are usually fixed at the design stage, and by using historic wave climate data those parameters are selected so that average power output is maximised.

A computer model was built using for a standard 18m wide flap with input sea torque data for six standard sea states. The cylinder and piston arrangements that resist the wave torque were assumed to have equal area and were assumed to act at a constant lever arm length. The model was implemented using Flowmaster software, but any other suitable software could have been used. Each of the sea states is referred to below using a reference Tex where x is the energy period of the sea state (in seconds) and a length in metres that is the average power per wavefront length (in kWatts/metre) of the sea state.

To remove pipeline surge effects a constant pressure source/sink was assumed at the high and low pressure hydraulic connections to the wave energy conversion device. The hydraulic to electrical power conversion is not modelled. Instead the total water power produced by the wave energy conversion device was measured.

Each of the sea states were initially modelled without spring accumulators 7, 9. Then by using an iterative method of adjusting the accumulator volume, accumulator pre-charge pressure, and system operating pressure the water power for sea state Te09Pi20 (having an energy period of 9 seconds, and an average power per wavefront length of 20 kWm⁻¹) was maximised. Sea state Te09Pi20 was chosen for optimisation as its wave power and frequency is in the middle of the range of sea data. The selected accumulator volume and pre-charge pressure that provided optimisation of the water power for the sea state Te09Pi20 was then used for all the other sea states. In the present example, the selected size of the accumulator was 140 litres and the selected pre-charge pressure was 25bar.

The water power obtained from each of the sea states, with and without accumulators 7, 9 attached, are shown in Tables 1 and 2 respectively, which also show the optimal system pressure for those sea states, for the selected accumulator size and pre-charge pressure. The tables also provide the average percentage of time of each cycle for which the calculated water power was obtained, and a weighted average water power that is the corresponding average power obtained over the whole of the cycle. It will be understood that the water power generally varies continuously over the whole of the cycle, and the calculated water power over a percentage of the cycle, provided in the table, is a representative measure.

**Table 1**

| Sea | Optimal system pressure bar | % of time | Water power KW | Weighted Average water power |
|---|---|---|---|---|
| Te07Pi10 | 55 | 25 | 152 | 38.0 |
| Te09Pi10 | 35 | 25 | 112.0 | 28.0 |
| Te09Pi20 | 57 | 15 | 198.6 | 29.8 |
| Te11Pi20 | 42 | 15 | 176.5 | 26.5 |
| Te11Pi40 | 58 | 10 | 297.9 | 29.8 |
| Te13Pi40 | 55 | 10 | 245.9 | 24.6 |
| | | | | 176.6 |

**Table 2**

| Sea | Pressure bar | % of time | Water power KW | Weighted Average Water power |
|---|---|---|---|---|
| Te07Pi10 | 55 | 25 | 202.4 | 50.6 |
| Te09Pi10 | 55 | 25 | 175.9 | 44.0 |
| Te09Pi20 | 57 | 15 | 267.8 | 40.2 |
| Te11Pi20 | 53 | 15 | 254.3 | 38.1 |
| Te11Pi40 | 58 | 10 | 370.9 | 37.1 |
| Te13Pi40 | 60 | 10 | 334.9 | 33.5 |
| | | | | 243.5 |

It can be seen the use of the accumulators 7, 9 to provide assistance to the movement of the flap increases output power by around 38%, averaged across all of the sea states considered, in this example.

It should be noted that for some of the sea states the optimal operating pressure is increased and the variation of power output as a function of system pressure is reduced, when the accumulators 7, 9 are included. It seems that the sea states that previously had a lower optimal operating pressure need to have an increase in optimal operating pressure to make better use of the available volume in the accumulators 7, 9. The decrease in the variation in power output as a function of operating pressure, resulting from the use of the accumulators 7, 9 can make the system easier to tune.

It is a feature of the embodiment of Figures 1 to 3 that failure of the accumulators 7, 9, for example due to loss of gas charge, does not prevent operation, and generation of power from, the wave energy conversion system, although the efficiency of operation may be reduced. That can be particularly useful in many practical circumstances, as the accumulators are often difficult to access in practice.

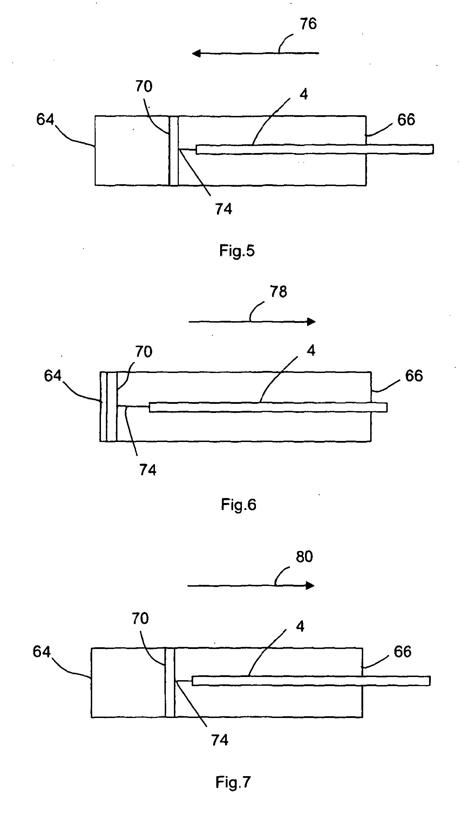

In a variant of the embodiment of Figures 1 to 3, a plurality of cylinders are provided, each connected to a respective flap. The outputs of each cylinder are connected to a common set of non-return valves 16, 18, 20, 22, and a single pair of fluid accumulators 7, 9 is provided, one accumulator 9 between non-return valves 16, 20 and the other accumulator 7 between non-return valves 18, 22 in an equivalent arrangement to that shown in Figures 2 and 3. In other variants, any suitable number and arrangement of accumulators or other movement assistance devices can be provided.
A related example is illustrated in Figures 5 to 7, which shows the cylinder 8 of that example. The other components of the system are the same as those illustrated in Figures 1 to 3, except that the spring accumulators 7, 9 are not included in the system. Instead, the piston 70 is connected to the driving rod 4 via a mechanical spring 74. In the example of Figure 5, the spring 74 is an axial spring, but any suitable type of spring can be used. The direction of movement of the driving rod 4 is indicates in Figures 5 to 7 by solid arrows 76, 78.

In operation, when the flap 5 starts to move it compresses the spring 74 until the spring load is sufficient to start moving the piston 70, which then starts the pumping of water to and from the cylinder 8. At the end of the flap stroke the piston stops pumping water, and the spring 74 expands, as illustrated in Figure 6, and moves the piston rod 4, and thus the flap 5 in the opposite direction, transferring the stored spring energy into flap kinetic energy, and then back into spring (tension) energy (as illustrated in Figure 7) as the flap 5 moves in the other direction. The spring energy is not wasted, instead at the end of each flap movement the spring 74 assists in getting the flap moving in the opposite direction before the flap 5 starts to perform work by moving the piston. In alternative examples to that illustrated in Figures 5 to 7, instead of being located between the piston 70 and the driving rod 4, the spring is located at another point in the power chain between the flap and the piston and cylinder arrangement, for example between the piston rod 4 and the flap 5.

Assistance to movement of the flap can be provided by reducing a resistance to movement of the flap as well as, or instead of, providing a force in the direction of movement of the flap. For example, in further examples, a limited amount of free play or backlash is built into the piston's movement within the cylinder or the connection of the oscillating flap 5 to the cylinder arrangement, so when the flap 5 changes direction no resistive torque is applied by the piston 6 and cylinder 8 until the flap 5 has rotated sufficiently to take up the free play. The flap 5 is effectively decoupled from the cylinder arrangement, which usually provides resistance to motion of the flap 5, during the part of the cycle when the flap changes direction and is taking up the free play. The free play assists in getting the flap moving before the load (resistive torque in this example) is applied by the piston 6 and cylinder 8.

In an embodiment, the accumulators 7,9 are used to provide the assistance to movement of the flap, and the pre-charge pressure of the accumulators 7, 9 is set sufficiently low that during the initial part of each cycle there is little or no resistance to movement of the piston in the cylinder arising from components downstream of that accumulator 7, 9 that is being in the process of being charged, whilst the pressure in the accumulator 7, 9 increases.

The embodiments and examples described above in relation to Figures 1 to 7 include a wave energy conversion device in the form of an oscillating flap. The wave energy conversion device is not limited to being an oscillating flap, and in other embodiments any suitable type of wave energy conversion device is used, for example, a buoy device or a surface following device. Similarly, although the embodiments and examples described above in relation to Figures 1 to 7 comprise a power extraction system that comprises a fluid pressurisation system in which motion of a piston in a cylinder is used to pressurise fluid that is subsequently used to drive operation of a turbine, any suitable type of power extraction system may be used. In the embodiments of Figures 1 to 7, assistance to the movement of the flap during parts of the cycle when the speed of movement of the flap is at a minimum (for example, when the flap is stationary) is provided by one or more of spring accumulators, a mechanical spring, or by the provision of a limited amount of free play or backlash. However, any other suitable device or arrangement for providing assistance to the movement of the flap or other mechanical element during parts of the cycle when the speed of movement of the flap or other mechanical element is at a minimum can be used in alternative embodiments and examples.

It will be understood that the present invention has been described above purely by way of example, and modifications of detail can be made within the scope of the invention.

## Claims

1. Wave energy conversion apparatus comprising:-
a mechanical element (5) arranged in operation to move repeatedly in a cycle in response to wave motion, wherein the speed of the mechanical element (5) varies between a maximum and a minimum during each cycle;
power extraction means arranged to extract energy from the movement of the mechanical element; a fluid accumulator device (7,9), arranged to assist the movement, in response to the wave motion, of the mechanical element (5), during at least one part of the cycle during which the speed of movement of the mechanical element (5) is substantially equal to the minimum for that cycle; and
a fluid conduit (24) for transferring pressurised fluid to an electrical power generation system , wherein
the power extraction means comprises a fluid pressurisation system that is arranged so that in operation fluid in the fluid pressurisation system is pressurised in response to movement of the mechanical element (5), the fluid pressurisation system comprises at least one one-way valve (20, 22) for transferring pressurised fluid from the fluid pressurisation system, the fluid accumulator device (7,9) is located upstream of the at least one one-way valve (20, 22), the fluid conduit (24) is located downstream of the at least one one-way valve (20, 22), and the electrical power generation system comprises a turbine (28, 32) and an associated electrical generator (34)..

2. Apparatus according to Claim 1, wherein
the one-way valve (20, 22) is located off-shore and the electrical power generation system is located on-shore.

3. Apparatus according to Claim 1 or 2, wherein the fluid accumulator device (7,9) is arranged to store energy from the motion of the mechanical element (5) during a further part of each oscillation cycle and to release the stored energy to the mechanical element (5) during said at least one part of the cycle during which the speed of movement of the mechanical element (5) is substantially equal to the minimum for that cycle.

4. Apparatus according to Claim 3, wherein the capacity of the fluid accumulator device (7,9) is selected in dependence on expected wave conditions.

5. Apparatus according to any preceding claim, wherein the fluid pressurisation system comprises a piston (6) and cylinder (8) coupled to the mechanical element (5), wherein the piston (6) is arranged to move in the cylinder (8) in response to movement of the mechanical element (5) thereby to pressurise fluid in the cylinder (8), and the fluid pressurisation system further comprises a fluid transfer conduit connecting the cylinder to the one one-way-valve (20) for transferring pressurised fluid from the cylinder, and the fluid accumulator device (9) is in communication with the fluid transfer conduit.

6. Apparatus according to Claim 5, wherein the fluid pressurisation system comprises a first one-way valve (20) arranged to transfer fluid from the fluid pressurisation system in response to movement of the piston in a first direction, a second one-way valve (22) arranged to transfer fluid from the fluid pressurisation system in response to movement of the piston in a second direction, a first accumulator device (9) upstream of the first one-way valve, and a second accumulator device (7) upstream of the second one-way valve.

7. A wave energy conversion system comprising a plurality of wave energy conversion apparatus, each wave energy conversion apparatus being in accordance with any of Claims 1 to 6, wherein the one or more one-way valves (20, 22) of each apparatus are connected to a common fluid conduit (24) for transferring pressurised fluid from the plurality of wave energy conversion apparatus to an electrical power generation sub-system.

8. A method of converting wave energy comprising:-
arranging a mechanical element (5) to move repeatedly in a cycle in response to wave motion; and
extracting energy from the movement of the mechanical element (5), wherein the speed of movement of the mechanical element (5) varies between a maximum and a minimum during each cycle, and the method further comprises assisting the movement of the mechanical element (5) during at least one part of the cycle during which the speed of movement of the mechanical element (5) is substantially equal to the minimum for that cycle;
the extracting of energy comprising using a fluid pressurisation system that is arranged so that in operation fluid in the fluid pressurisation system is pressurised in response to movement of the mechanical element (5),
the method further comprises using a fluid accumulator device (7, 9) to assist movement of the mechanical element (5), wherein the fluid accumulator device (7, 9) is located upstream of at least one one-way valve (20, 22), and
the method further comprises generating electricity from the extracted energy using an electrical power generation system comprising a turbine (28, 32) and an associated electrical generator (34), whereby pressurised fluid is transferred to the electrical power generation system by a fluid conduit (24) located downstream said at least one one-way valve (20, 22).

## Patentansprüche

1. Wellenenergie-Umwandlungsvorrichtung, die Folgendes umfasst:
ein mechanisches Element (5), das im Betrieb so angeordnet ist, dass es sich als Reaktion auf die Wellenbewegung wiederholt in einem Zyklus bewegt, wobei sich die Geschwindigkeit des mechanischen Elementes (5) während jedes Zyklus zwischen einem Maximum und einem Minimum verändert,
ein Energiegewinnungsmittel, das dafür angeordnet ist, Energie aus der Bewegung des mechanischen Elementes zu gewinnen, eine Fluidsammlereinrichtung (7, 9), die dafür angeordnet ist, als Reaktion auf die Wellenbewegung, die Bewegung des mechanischen Elementes (5) während wenigstens eines Teils des Zyklus, während dessen die Geschwindigkeit der Bewegung des mechanischen Elementes (5) im Wesentlichen gleich dem Minimum für diesen Zyklus ist, zu unterstützen und
eine Fluidleitung (24) zum Befördern eines unter Druck gesetzten Fluids zu einem Elektroenergie-Erzeugungssystem, wobei
das Energiegewinnungsmittel ein Fluid-Druckbeaufschlagungssystem umfasst, das so angeordnet ist, dass im Betrieb ein Fluid in dem Fluid-Druckbeaufschlagungssystem als Reaktion auf die Bewegung des mechanischen Elementes (5) unter Druck gesetzt wird, wobei das Fluid-Druckbeaufschlagungssystem wenigstens ein Einwegventil (20, 22) umfasst, um ein unter Druck gesetztes Fluid von dem Fluid-Druckbeaufschlagungssystem zu befördern, wobei die Fluidsammlereinrichtung (7, 9) stromaufwärts von dem wenigstens einen Einwegventil (20, 22) angeordnet ist, die Fluidleitung (24) stromabwärts von dem wenigstens einen Einwegventil (20, 22) angeordnet ist und das Elektroenergie-Erzeugungssystem eine Turbine (28, 32) und einen zugeordneten elektrischen Generator (34) umfasst.

2. Vorrichtung nach Anspruch 1, wobei
das Einwegventil (20, 22) vor der Küste angeordnet ist und das Elektroenergie-Erzeugungssystem an Land angeordnet ist.

3. Vorrichtung nach Anspruch 1 oder 2, wobei die Fluidsammlereinrichtung (7, 9) dafür angeordnet ist, während eines weiteren Teils jedes Schwingungszyklus Energie von der Bewegung des mechanischen Elementes (5) zu speichern und während des wenigstens einen Teils des Zyklus während dessen die Geschwindigkeit der Bewegung des mechanischen Elementes (5) im Wesentlichen gleich dem Minimum für diesen Zyklus ist, die gespeicherte Energie an das mechanische Element (5) abzugeben.

4. Vorrichtung nach Anspruch 3, wobei die Kapazität der Fluidsammlereinrichtung (7, 9) in Abhängigkeit von den erwarteten Wellenbedingungen gewählt wird.

5. Vorrichtung nach einem der vorhergehenden Ansprüche, wobei das Fluid-Druckbeaufschlagungssystem einen Kolben (6) und einen Zylinder (8), die an das mechanische Element (5) gekoppelt sind, umfasst, wobei der Kolben (6) dafür angeordnet ist, sich als Reaktion auf die Bewegung des mechanischen Elementes (5) in dem Zylinder (8) zu bewegen, um dadurch ein Fluid in dem Zylinder (8) unter Druck zu setzen, und das Fluid-Druckbeaufschlagungssystem ferner eine Fluidbeförderungsleitung umfasst, die den Zylinder mit dem Einwegventil (20) verbindet, um das unter Druck gesetzte Fluid aus dem Zylinder zu befördern, und wobei die Fluidsammlereinrichtung (9) in Verbindung mit der Fluidbeförderungsleitung steht.

6. Vorrichtung nach Anspruch 5, wobei das Fluid-Druckbeaufschlagungssystem ein erstes Einwegventil (20), das dafür angeordnet ist, als Reaktion auf eine Bewegung des Kolbens in einer ersten Richtung Fluid von dem Fluid-Druckbeaufschlagungssystem zu befördern, ein zweites Einwegventil (22), das dafür angeordnet ist, als Reaktion auf eine Bewegung des Kolbens in einer zweiten Richtung Fluid von dem Fluid-Druckbeaufschlagungssystem zu befördern, eine erste Sammlereinrichtung (9) stromaufwärts von dem ersten Einwegventil und eine zweite Sammlereinrichtung (7) stromaufwärts von dem zweiten Einwegventil umfasst.

7. Wellenenergie-Umwandlungssystem, das mehrere Wellenenergie-Umwandlungsvorrichtungen umfasst, wobei jede eine Wellenenergie-Umwandlungsvorrichtung nach einem der Ansprüche 1 bis 6 ist, wobei das eine oder die mehreren Einwegventile (20, 22) jeder Vorrichtung mit einer gemeinsamen Fluidleitung (24) verbunden sind, um ein unter Druck gesetztes Fluid von den mehreren Wellenenergie-Umwandlungsvorrichtungen zu einem Elektroenergie-Erzeugungsuntersystem zu befördern.

8. Verfahren zum Umwandeln von Wellenenergie, das Folgendes umfasst:
das Anordnen eines mechanisches Elements (5) so, dass es sich als Reaktion auf die Wellenbewegung wiederholt in einem Zyklus bewegt, und
das Gewinnen von Energie aus der Bewegung des mechanischen Elementes (5), wobei sich die Bewegungsgeschwindigkeit des mechanischen Elementes (5) während jedes Zyklus zwischen einem Maximum und einem Minimum verändert, und wobei das Verfahren ferner das Unterstützen der Bewegung des mechanischen Elementes (5) während wenigstens eines Teils des Zyklus, während dessen die Geschwindigkeit der Bewegung des mechanischen Elementes (5) im Wesentlichen gleich dem Minimum für diesen Zyklus ist,
wobei das Gewinnen von Energie das Verwenden eines Fluid-Druckbeaufschlagungssystems umfasst, das so angeordnet ist, dass im Betrieb ein Fluid in dem Fluid-Druckbeaufschlagungssystem als Reaktion auf die Bewegung des mechanischen Elementes (5) unter Druck gesetzt wird,
wobei das Verfahren ferner das Verwenden einer Fluidsammlereinrichtung (7, 9) umfasst, um die Bewegung des mechanischen Elementes (5) zu unterstützen, wobei die Fluidsammlereinrichtung (7, 9) stromaufwärts von wenigstens einem Einwegventil (20, 22) angeordnet ist, und
wobei das Verfahren ferner das Erzeugen von Elektrizität aus der gewonnenen Energie unter Verwendung eines Elektroenergie-Erzeugungssystems umfasst, das eine Turbine (28, 32) und einen zugeordneten elektrischen Generator (34) umfasst, wodurch ein unter Druck gesetztes Fluid durch eine Fluidleitung (24), die stromabwärts von dem wenigstens einen Einwegventil (20,22) angeordnet ist, zu dem Elektroenergie-Erzeugungssystem befördert wird.

## Revendications

1. Appareil de conversion de l'énergie houlomotrice, comprenant:
un élément mécanique (5) adapté, lors du fonctionnement, pour effectuer un mouvement de façon répétée en un cycle en réponse au mouvement des vagues, la vitesse de l'élément mécanique (5) variant entre un maximum et un minimum au cours de chaque cycle;
un moyen d'extraction d'énergie adapté pour extraire l'énergie issue du mouvement de l'élément mécanique; un dispositif accumulateur de fluide (7, 9) adapté pour assister le mouvement, en réponse au mouvement des vagues, de l'élément mécanique (5) pendant au moins une partie du cycle pendant laquelle la vitesse du mouvement de l'élément mécanique (5) est sensiblement égale au minimum pour ce cycle; et
une conduite de fluide (24) pour transférer un fluide sous pression vers un système de génération d'énergie électrique, dans lequel
le moyen d'extraction d'énergie comprend un système de mise en pression de fluide qui est adapté de sorte que, lors du fonctionnement, un fluide dans le système de mise en pression de fluide est mis en pression en réponse au mouvement de l'élément mécanique (5), le système de mise en pression de fluide comprend au moins une soupape unidirectionnelle (20, 22) pour transférer un fluide sous pression depuis le système de mise en pression de fluide, le dispositif accumulateur de fluide (7, 9) est situé en amont de l'au moins une soupape unidirectionnelle (20, 22), la conduite de fluide (24) est située en aval de l'au moins une soupape unidirectionnelle (20, 22) et le système de génération d'énergie électrique comprend une turbine (28, 32) et un générateur électrique (34) associé.

2. Appareil selon la revendication 1, dans lequel
la soupape unidirectionnelle (20, 22) est située en mer et le système de génération d'énergie électrique est situé sur terre.

3. Appareil selon la revendication 1 ou 2, dans lequel le dispositif accumulateur de fluide (7, 9) est adapté pour stocker l'énergie issue du mouvement de l'élément mécanique (5) pendant une autre partie de chaque cycle d'oscillation et pour libérer l'énergie stockée vers l'élément mécanique (5) pendant ladite au moins une partie du cycle pendant laquelle la vitesse du mouvement de l'élément mécanique (5) est sensiblement égale au minimum pour ce cycle.

4. Appareil selon la revendication 3, dans lequel la capacité du dispositif accumulateur de fluide (7, 9) est choisie en fonction des conditions de houle attendues.

5. Appareil selon l'une quelconque des revendications précédentes, dans lequel le système de mise en pression de fluide comprend un piston (6) et un cylindre (8) couplés à l'élément mécanique (5), dans lequel le piston (6) est adapté pour se déplacer dans le cylindre (8) en réponse au mouvement de l'élément mécanique (5), mettant ainsi en pression un fluide dans le cylindre (8), et le système de mise en pression de fluide comprend, en outre, une conduite de transfert de fluide reliant le cylindre à la soupape unidirectionnelle (20) pour transférer le fluide sous pression depuis le cylindre, et le dispositif accumulateur de fluide (9) communique avec la conduite de transfert de fluide.

6. Appareil selon la revendication 5, dans lequel le système de mise en pression de fluide comprend une première soupape unidirectionnelle (20) adaptée pour transférer un fluide depuis le système de mise en pression de fluide en réponse à un mouvement du piston dans une première direction, une seconde soupape unidirectionnelle (22) adaptée pour transférer un fluide depuis le système de mise en pression de fluide en réponse à un mouvement du piston dans une seconde direction, un premier dispositif accumulateur (9) en amont de la première soupape unidirectionnelle et un second dispositif accumulateur (7) en amont de la seconde soupape unidirectionnelle.

7. Système de conversion d'énergie houlomotrice comprenant une pluralité d'appareils de conversion d'énergie houlomotrice, chaque appareil de conversion d'énergie houlomotrice étant conforme à l'une quelconque des revendications 1 à 6, dans lequel la ou les soupape/s unidirectionnelle/s (20, 22) de chaque appareil est/sont reliée/s à une conduite de fluide commune (24) pour transférer un fluide sous pression depuis la pluralité d'appareils de conversion d'énergie houlomotrice vers un sous-système de génération d'énergie électrique.

8. Procédé de conversion d'énergie houlomotrice, comprenant:
agencer un élément mécanique (5) pour qu'il effectue un mouvement de façon répétitive en un cycle en réponse au mouvement des vagues; et
extraire l'énergie issue du mouvement de l'élément mécanique (5), la vitesse du mouvement de l'élément mécanique (5) variant entre un maximum et un minimum au cours de chaque cycle, et le procédé comprend, en outre, le fait d'assister le mouvement de l'élément mécanique (5) pendant au moins une partie du cycle pendant laquelle la vitesse du mouvement de l'élément mécanique (5) est sensiblement égale au minimum pour ce cycle;
l'extraction de l'énergie comprenant l'utilisation d'un système de mise en pression de fluide qui est adapté de sorte que, lors du fonctionnement, un fluide dans le système de mise en pression de fluide est mis en pression en réponse au mouvement de l'élément mécanique (5),
le procédé comprend, en outre, l'utilisation d'un dispositif accumulateur de fluide (7, 9) pour assister le mouvement de l'élément mécanique (5), le dispositif accumulateur de fluide (7, 9) étant situé en amont d'au moins une soupape unidirectionnelle (20, 22), et
le procédé comprend, en outre, la génération d'électricité à partir de l'énergie extraite au moyen d'un système de génération d'énergie électrique comprenant une turbine (28, 32) et un générateur électrique (34) associé, moyennant quoi le fluide sous pression est transféré vers le système de génération d'énergie électrique par une conduite de fluide (24) située en aval de ladite au moins une soupape unidirectionnelle (20, 22).
